# EUROPEAN PATENT APPLICATION

(11) **EP 2 522 217 A1**
(43) Date of publication of application: **14.11.2012**
(21) Application number: 12167583.9
(22) Date of filing: 10.05.2012
(51) Int. Cl.: A01K 1/01

(54) **A scraper system for animal waste**

(30) Priority: 10.05.2011 GB 201107732
(71) Applicant: NGS Agri Limited, Co. Galway Ballygar (IE)
(72) Inventor: Egan, Joseph, Ballygar, Co. Galway (IE)
(74) Representative: Purdy, Hugh Barry

(57) **Abstract**

A silage scraper system suitable for scraping silage along a passageway and comprising scraper means (10) adapted to move lengthways along the passageway, actuating means for controlling the movement of the scraper means along the passageway, and a tripping device (1) for modifying (i.e. stopping, or reversing the direction of) movement of the scraper means when it encounters an obstacle. The tripping device (1) comprises a slider (2) mounted within a housing (4) for movement along an axis generally parallel to the movement of the scraper means. At least a proximal end of the slider abuts a resiliently deformable means (5a, 5b). The slider (2) is operably connected to the actuating means such that when the scraper encounters an obstacle and stops suddenly, inertia causes the slider to move and engage the actuating means to modify movement of the scraper means. The resiliently deformable means is generally a helical spring (5a, 5b), which upon movement of the slider (2) biases the slider back to its resting position (Fig. la). The actuating means is a ratchet mechanism (12) which extends along the passageway and is adapted for backwards and forwards reciprocal movement, and a pawl (13) pivotally mounted on the scraper means (10) for engagement with the ratchet mechanism. The slider includes an arm (3) which in a resting position abuts an end of the pawl such that movement of the slider effects movement of the pawl out of engagement with the ratchet mechanism.

## Description

### Technical Field

The invention relates to scraper system for animal waste including a tripping device to stop movement of the scraper when it encounters an obstacle. The invention also relates to a scraper suitable for use in an animal waste scraper system, and a tripping device for an animal waste scraper system.

### Background to the Invention

An automatic hydraulic scraping system comprises of a steel spine that is pushed forward by a hydraulic ram using a ratchet mechanism. Attached to the spine are steel blades and wings that scrape and move along the ground of the passageway, clearing the waste into another waste storage facility. Scrapers need to be of significant weight to ensure they do not ride over dirt/debris and that they are strong enough to push forward heavy waste to the final point of cleaning. A recurring problem arises regarding animal safety whilst in the passageway during scraper operation.

Previous solutions involve having a loose ratchet system that would allow the ratchet driver to rotate on an axis and change the direction of motion once it comes against a certain load.

The idea is to eliminate the danger of pushing immobilised animals to an area where they might become harmed. The problem that this method poses is that the tripping of the scraper cannot be controlled and the scraper ends up tripping too frequently as a result of general traffic from the animals, or maybe some hardened tough manure.

In order to overcome this, the farmer must resort to locking the driver in position by inserting a pin to prevent rotation, in order to effectively clean the passageway. This eliminates all safety and leaves the animals exposed to full force of the hydraulic system.

Another attempt at solving this problem involved a pressure sensor that could be set to certain values, once the scraper come in contact with a load exceeding the specified pressure, the scraper will stop working and shut itself off.

Such pressure gauged systems encounter difficulties in setting correct pressure values, as the variables are numerous i.e. changing viscosity of oil due to atmospheric conditions, varying lengths of passageways.

The difficulties associated with this method lead to farmers having to deactivate the sensor so that the scraper can function for cleaning, its main purpose.

Russian Patent No: 2310323 describes a slurry scraping system having a trip mechanism that consists of a rod which extends out in front of the scraper. When a leading end of the rod engages an obstacle this causes the rod to move relative to the scraper, causing an opposite end of the rod to push against the pawl pivoting it out of engagement with the ratchet mechanism. This system only works if the rod comes into contact with an obstruction; thus, if the obstruction is not in the path of the rod, for example it could be cows legs on either side of the rod, then the tripping mechanism will not be activated. Moreover, the rod is completely unprotected and in practice would be trodden on and destroyed when employed on a farm.

It is an object of the invention to overcome at least one of the above problems.

### Statements of Invention

The Applicants have overcome the problems of the prior art by providing a tripping device that is actuated when the scraper itself encounters an obstacle. The tripping device is fixed to the scraper for movement therewith, and comprises a slider arm mounted between two resiliently deformable means (these may be helical springs, or hydraulic or pneumatic rams). Thus, when the scraper encounters an obstacle and stops, inertia causes the slider to bear against one of the resiliently deformable means, causing movement of the slider relative to the scraper. The slider is disposed with respect to the pivotally mounted pawl such that movement of the slider relative to the scraper means effects pivotal movement of the pawl out of engagement with the ratchet mechanism, thereby stopping movement of the scraper.

Thus, in a first aspect, the invention provides an animal waste scraper system suitable for scraping animal waste along a passageway and comprising scraper means (10) adapted to move lengthways along the passageway, actuating means for effecting and/or controlling the movement of the scraper means along the passageway, and a tripping device (1) for stopping, or reversing the direction of, movement of the scraper means when it encounters an obstacle. Suitably, the actuating means comprises a ratchet mechanism mounted lengthways along the passageway and generally capable of reciprocating forwards and backwards movement. The scraper means suitably includes a pivotally-mounted pawl (13) which in use engages the ratchet mechanism such that the reciprocating motion of the ratchet mechanism effects movement of the scraper means along the passageway. The tripping device comprises a slider (2) mounted to the scraper means (10) between two resiliently deformable means (5a, 5b) such that when the scraper means encounters an obstacle and stops or slows, inertia causes the slider to bear against one of the resiliently deformable means thereby moving relative to the scraper means along an axis generally parallel to the movement of the scraper means. The slider (2) is operably connected to the pawl (13) such that movement of the slider relative to the scraper means effects pivotal movement of the pawl out of engagement with the ratchet mechanism.

Compared with the system disclosed in RU2310323, the tripping device of the invention is adapted to be triggered by an obstacle located at any position across the passageway. Further, as the tripping device is disposed on the scraper means, it is not exposed forward of the scraper like the system disclosed in RU2310323. Ideally, the slider is located within a housing, providing further protection for the tripping mechanism. Moreover, as soon as the slider returns to its resting position, the pawl will generally re-engage with the ratchet mechanism and movement of the slider means will re-commence.

In a preferred embodiment of the invention, the slider is mounted within the housing between two resiliently deformable means, wherein movement of the slider along the axis in either direction causes the slider to bear against one of the resiliently deformable means. This enables the tripping device to function when the slider means is moving in either a forward or backward direction. This is generally desirable as the scraper means is required to return to its resting position after it has been employed to clear a passageway of silage.

Ideally, the or each resiliently deformable means comprises a spring, preferably a helical spring, which is ideally adjustable to modify the tension of the spring. However, other forms of resiliently deformable means may be employed to bias the slider towards its original position in the housing, for example a hydraulic or pneumatic ram, a resiliently deformable material, or the like. Thus, the purpose of the resiliently deformable means is to ensure that the slider returns to its resting position promptly, which ensures that the pawl re-engages the ratchet quickly and re-establishes movement of the scraper. The resiliently deformable means is ideally adjustable to modify its resiliency.

In a preferred embodiment of the invention, the slider is mounted at each end to the housing via a helical spring, wherein the tripping device ideally includes tensioning means for modifying the tension of at least one, and ideally each, of the helical springs. Tensioning of the two springs allows the pressure at which the tripping device is actuated to be varied, depending on the circumstances. Thus, for example, when the device is being employed in a passageway in which dairy cows are housed, a higher "tripping pressure" may be employed as when the device is being employed in a housing for pigs, for example. Various types of tensioning means are envisaged. For example, the tensioning means may comprise a screw mounted at an end of the housing which is adjustable to compress the helical spring. HEX type springs are especially suitable for this purpose.

In one preferred embodiment of the invention, the scraper means comprises at least one scraper blade (or the like) connected to a carriage, wherein the carriage is adapted for engaging the ratchet mechanism. Typically, the tripping device is mounted on the carriage, wherein a top of the carriage includes an opening to allow the slider (arm) engage with the pawl. Suitably, the pawl is pivotally mounted for movement into and out of engagement with the ratchet mechanism. The slider is generally disposed with respect to the pawl such that movement of the slider (relative to the scraper) causes the pawl to move out of engagement with the ratchet - in this regard, the slider ideally includes an actuating arm which projects into the carriage such that in its resting position the actuating arm abuts the pawl, or lies adjacent the pawl. Optionally, the slider may be actually connected an end of the pawl.

The invention also relates to a animal waste scraper suitable for use with an animal waste scraper system of the invention. The scraper generally comprises a pivotally-mounted pawl (13) adapted to engage a ratchet mechanism such that the reciprocating motion of the ratchet mechanism effects movement of the scraper means along the ratchet mechanism, and a tripping device (1) for stopping, or reversing the direction of, movement of the scraper means when it encounters an obstacle. Suitably, the tripping device comprises a slider (2) mounted to the scraper means (10) between two resiliently deformable means (5a, 5b) such that when the scraper means encounters an obstacle and stops or slows inertia typically causes the slider to bear against one of the resiliently deformable means thereby moving relative to the scraper means typically along an axis generally parallel to the movement of the scraper means. The slider (2) is typically disposed with respect to the pawl (13) such that movement of the slider relative to the scraper means effects pivotal movement of the pawl out of engagement with the ratchet mechanism.

Generally, as soon as the slider returns to its resting position, the pawl will re-engage with the ratchet mechanism and movement of the slider means will re-commence.

The slider is typically mounted within the housing between two resiliently deformable means, wherein movement of the slider along the axis is either direction causes the slider to bear against one of the resiliently deformable means. This enables the tripping device to function when the slider means is moving in either a forward or backward direction. This is generally desirable as the scraper means is required to return to its resting position after it has been employed to clear a passageway of animal waste.

Ideally, the or each resiliently deformable means comprises a spring, preferably a helical spring, which is adjustable to modify the tension of the spring. However, other forms of resiliently deformable means may be employed to bias the slider towards its original position in the housing, for example a hydraulic or pneumatic ram, a resiliently deformable material, or the like. Thus, the purpose of the resiliently deformable means is to ensure that the slider returns to its resting position promptly, which ensures that the pawl re-engages the ratchet quickly and re-establishes movement of the scraper.

In a preferred embodiment of the invention, the slider is mounted at each end to the housing via a helical spring, wherein the tripping device includes tensioning means for modifying the tension of at least one, and ideally each, of the helical springs. Tensioning of the two springs allows the pressure at which the tripping device is actuated to be varied, depending on the circumstances. Thus, for example, when the device is being employed in a passageway in which dairy cows are housed, a higher "tripping pressure" may be employed as when the device is being employed in a housing for pigs, for example. Various types of tensioning means are envisaged. For example, the tensioning means may comprise a screw mounted at an end of the housing which is adjustable to compress the helical spring. HEX type springs are especially suitable for this purpose.

In one preferred embodiment of the invention, the scraper means comprises at least one scraper blade (or the like) connected to a carriage, wherein the carriage is adapted for engaging the ratchet mechanism. Typically, the tripping device is mounted on the carriage, wherein a top of the carriage includes an opening to allow the slider engage with the pawl. Suitably, the pawl is pivotally mounted for movement into and out of engagement with the ratchet mechanism. The slider is disposed with respect to the pawl such that movement of the slider causes the pawl to move out of engagement with the ratchet - in this regard, the slider includes an actuating arm which projects into the carriage such that in its resting position the actuating arm abuts the pawl.

The invention also relates to a tripping device (1) suitable for use with an animal waste scraper (10) of the type having a housing and a pivotally-mounted pawl (13) disposed within the housing that in use engages a ratchet mechanism capable of reciprocating forward and backward motion. The tripping device comprising a housing (4) adapted for being fixed to an animal waste scraper, ideally a top of an animal waste scraper. The housing contains a slider (2) mounted within the housing between two resiliently deformable means such that when movement of the animal waste scraper stops or slows the inertia of the slider causes the slider to move and bear against one of the resiliently deformable means. The slider generally comprises an arm adapted to extend into the scraper housing and cooperate with the pivotally-mounted pawl such that movement of the slider relative to the scraper effects pivotal movement of the pawl out of engagement with the ratchet mechanism.

The tripping device is ideally adapted to be retro-fitted to an animal waste scraper.

Ideally, the housing (4) is adapted to be attached to a top of an animal waste scraper, and in which the arm (3) extends beneath the housing such that when attached to the animal waste scraper, an end of the arm is disposed adjacent to an end of the pivotally-mounted pawl (13).The housing ideally has an elongated slot along its base through which the arm depends. Optionally the housing has no base.

Ideally, the resiliently deformable means comprises a spring, ideally a helical spring which is adjustable to modify the tension of the spring. As indicated above, other forms of resiliently deformable means are envisaged such as for example pneumatic or hydraulic springs, or the like.

Suitably, the slider is mounted at each end to the housing via a helical spring, wherein the tripping device includes tensioning means for modifying the tension of at least one, and typically both, of the helical springs. Suitably, the tripping device includes tensioning means for modifying the tension of both of the helical springs. Ideally, the tensioning means comprises a screw mounted at an end of the housing which is adjustable to compress the helical spring.

This device is made up of strong components with minimal risk of wear and tears. The simple mechanical nature of the device eliminates technical issues and variables for failure. The invention gives the control necessary for the safety mechanism of tripping to work successfully in real application.

### Brief Description of the Figures

The invention will be more clearly understood from the following description of some embodiment thereof, given by way of example only, with reference to the accompanying drawings in which:
Figures 1a, 1b and 1c show the elevation, plan and end view of a tripping device for an animal waste scraper of the invention; and
Figure 2 is a side lavational, partially cut-away, view of a part of an animal waste scraper of the invention.

### Detailed Description of the Invention

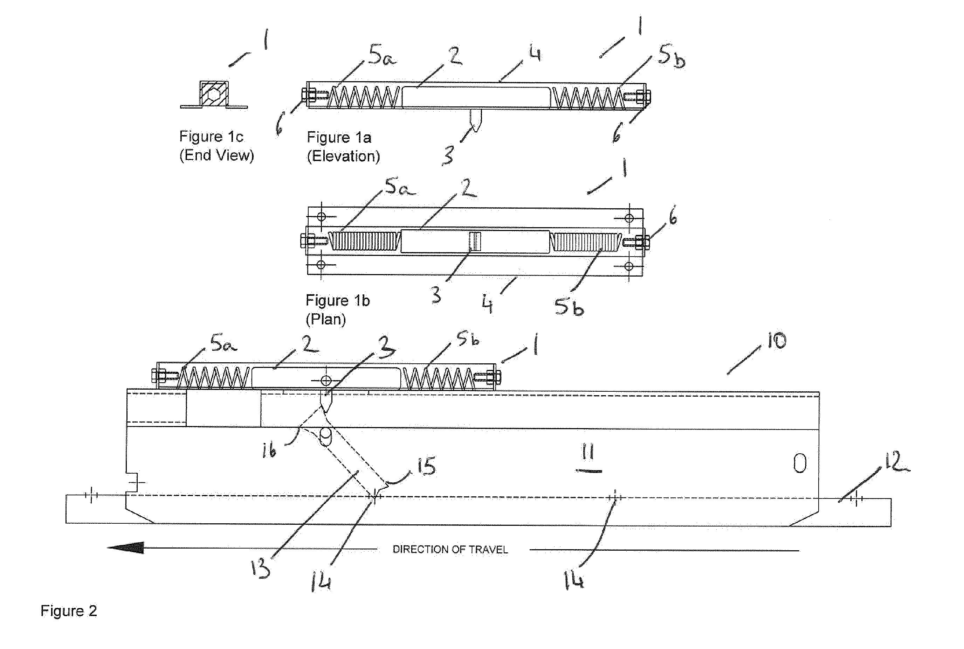

Referring to the drawings, and initially to Figs 1a, 1b and 1c, there is illustrated a tripping device of the invention, indicated generally by the reference numeral 1. The device comprises a slider 2 having an arm 3 mounted within a steel housing 4 by means of helical springs 5a and 5b such that the slider is capable of movement along the housing. At each end the spring bears against an adjustable HEX screw 6 such that adjustment of the screw changes the tension of the helical spring.

Referring to Fig. 2, there is illustrated a scraping means forming part of an animal waste scraper system of the invention indicated generally by the reference numeral 10 and comprising the tripping device 1 mounted on a carriage 11. Although it is not illustrated in the figure, one or more scraper blades will depend perpendicularly from the carriage 11. The tripping device 1 is mounted on top of the carriage 11 with the arm 3 extending into an opening in the top of the carriage. The carriage 11 is mounted on a ratchet mechanism 12 which is capable of reciprocating forward and backwards movement. The carriage 11 includes a pawl 13 which is pivotally mounted on the carriage for movement into and out of engagement with notches 14 formed on the ratchet mechanism. In normal operation, a proximal end 15 of the pawl 13 engages a notch 14 on the ratchet mechanism such that forward movement of the ratchet effects forward movement of the carriage, wherein the pawl disengages from the notch when the ratchet moves backwards. A distal end 16 of the pawl 13 abuts the arm 3 of the slider 2 such that movement of the slider in the direction of the arrow shown effects pivotal movement of the pawl 13 out of engagement with the ratchet mechanism.

In use, reciprocating movement of the ratchet mechanism 12 effects the movement of the carriage along the ratchet mechanism and therefore along the passageway, whereby the scraper blades (not shown) that depend from the carriage scrape animal waste (for example cow slurry) towards an end of the passageway. When the scraper means 10 encounters an obstacle, for example a hoof of a cow, the carriage 11 stops, causing the slider 2 to bear against the helical spring 5a due to its inertia. The movement of the slider 2 causes the arm 3 to bear against the distal end 16 of the pawl 13, which in turn causes pivotal movement of the pawl 13 out of engagement with the ratchet mechanism thereby stopping movement of the scraper means 10 along the passageway. The slider 2 will quickly return to its resting position due to the bias of the helical spring 5a, resulting in the pawl 13 returning to its resting position which in turn allows the pawl 13 to re-engage with the ratchet mechanism 12 that allowing further movement of the scraper means along the passageway in response to reciprocating movement of the ratchet.

It will be appreciated that adjustment of the deformability of the resiliently deformable means effects adjustment of the threshold pressure required for actuation of the tripping mechanism. Thus, for example, if the resiliently deformable means is a hydraulic ram, the use of different liquids in the ram will change the threshold pressure. Likewise, if two helical springs are employed, then adjusting the tension of one or both of the springs will change the threshold pressure of the tripping device. It will be appreciated that this is important as the threshold pressure required for the device will change depending on a number of variables such as, for example, the type of animals the device is being employed with.

The invention is not limited to the embodiments hereinbefore described which may be varied in construction and detail without departing from the spirit of the invention. Thus, while the invention has been described in the context of an animal waste scraper system having a tripping mechanism to stop or reverse movement of the scraper when it encounters an obstacle, the invention may be employed to scrape any material from a passageway and is not restricted to scraping animal waste. Likewise, while the resiliently deformable means of the tripping device is embodied in the specification by a helical spring, it will be appreciated that other resiliently deformable means, for example non-helical springs such hydraulic or pneumatic springs or resiliently deformable materials may be employed to ensure that the slider is biased to return to its resting position after movement.

## Claims

1. An animal waste scraper system suitable for scraping animal waste along a passageway and comprising scraper means (10) adapted to move lengthways along the passageway, actuating means for effecting movement of the scraper means along the passageway, and a tripping device (1) for stopping, or reversing the direction of, movement of the scraper means when it encounters an obstacle, wherein the actuating means comprises a ratchet mechanism mounted lengthways along the passageway and capable of reciprocating forwards and backwards movement, the scraper means including a pivotally-mounted pawl (13) which engages the ratchet mechanism such that the reciprocating motion of the ratchet mechanism effects movement of the scraper means along the passageway, **characterised in that** the tripping device comprises a slider (2) mounted to the scraper means (10) between two resiliently deformable means (5a, 5b) such that when the scraper means encounters an obstacle and stops or slows, inertia causes the slider to bear against one of the resiliently deformable means thereby moving relative to the scraper means along an axis generally parallel to the movement of the scraper means, wherein the slider (2) is disposed with respect to the pawl (13) such that movement of the slider relative to the scraper means effects pivotal movement of the pawl out of engagement with the ratchet mechanism.

2. An animal waste scraper as claimed in Claim 1 in which at least one of resiliently deformable means is adjustable to modify its resiliency.

3. An animal waste scraper system as claimed in Claim 1 or 2 in which the resiliently deformable means comprises a helical spring (5a, 5b).

4. An animal waste scraper system as claimed in Claim 2 in which one or both of the helical springs is adjustable to modify the tension of the or each spring.

5. An animal waste scraper system as claimed in any preceding Claim in which when the scraper means encounters an obstacle, inertia causes the slider to move causing pivotal movement of the pawl to disengage with the ratchet mechanism from the forward drive orientation and re-engage with the ratchet mechanism in a reverse drive orientation.

6. An animal waste scraper suitable for use with an animal waste scraper system of any of Claims 1 to 5, the scraper comprising a pivotally-mounted pawl (13) adapted to engage a ratchet mechanism such that the reciprocating motion of the ratchet mechanism effects movement of the scraper means along the ratchet mechanism, and a tripping device (1) for stopping, or reversing the direction of, movement of the scraper means when it encounters an obstacle, **characterised in that** the tripping device comprises a slider (2) mounted to the scraper means (10) between two resiliently deformable means (5a, 5b) such that when the scraper means encounters an obstacle and stops or slows inertia causes the slider to bear against one of the resiliently deformable means thereby moving relative to the scraper means along an axis generally parallel to the movement of the scraper means, wherein the slider (2) is disposed with respect to the pawl (13) such that movement of the slider relative to the scraper means effects pivotal movement of the pawl out of engagement with the ratchet mechanism.

7. An animal waste scraper as claimed in Claim 6 in which the resiliently deformable means comprises a helical spring (5a, 5b).

8. An animal waste scraper as claimed in Claim 7 in which one or both of the helical springs is adjustable to modify the tension of the or each spring.

9. An animal waste scraper as claimed in any of Claims 6 to 8 in which when the scraper means encounters an obstacle, inertia causes the slider to move causing pivotal movement of the pawl to disengage with the ratchet mechanism from the forward drive orientation and re-engage with the ratchet mechanism in a reverse drive orientation.

10. An animal waste scraper system of any of Claims 1 to 5, or an animal waste scraper of any of Claims 6 to 9 in which the scraper comprises a carriage adapted to engage with and move along the ratchet mechanism, the carriage having a pair of transverse scraper arms.

11. A tripping device (1) suitable for use with an animal waste scraper (10) of the type having a housing and a pivotally-mounted pawl (13) disposed within the housing that in use engages a ratchet mechanism capable of reciprocating forward and backward motion, the tripping device comprising a housing (4) adapted for being fixed to a top of an animal waste scraper, the housing containing a slider (2) mounted within the housing between two resiliently deformable means such that when movement of the animal waste scraper stops or slows the inertia of the slider causes the slider to move and bear against one of the resiliently deformable means, wherein the slider comprises an arm adapted to extend into the scraper housing and cooperate with the pivotally-mounted pawl such that movement of the slider relative to the scraper effects pivotal movement of the pawl out of engagement with the ratchet mechanism.

12. A tripping device as claimed in Claim 11 in which at least one of resiliently deformable means is adjustable to modify its resiliency.

13. A tripping device as claimed in Claim 11 or 12 in which the resiliently deformable means comprises a helical spring (5a, 5b).

14. A tripping device as claimed in Claim 13 in which one or both of the helical springs is adjustable to modify the tension of the or each spring.

15. A tripping device as claimed in any of Claims 11 to 14 in which an end of the slider arm abuts an end of the pawl.
